Europäisches Patentamt

European Patent Office

Office européen des brevets

(19)

(11) Publication number: **0 252 210**
**A2**

(12) **EUROPEAN PATENT APPLICATION**

(21) Application number: 87102824.7

(22) Date of filing: 27.02.87

(51) Int. Cl.⁴: **C04B 14/10** , C04B 28/02 ,
C04B 40/00 ,
//(C04B28/02,14:10,14:38,16:06-
,24:28),(C04B28/02,14:10,14:38-
,14:40,24:28),(C04B28/02,14:10-
,14:38,18:24,24:28)

The title of the invention has been amended (Guidelines for Examination in the EPO, A-III, 7.3).

(30) Priority: 04.07.86 ES 8600156

(43) Date of publication of application:
**13.01.88 Bulletin 88/02**

(84) Designated Contracting States:
**AT BE CH DE FR GB GR IT LI LU NL SE**

(71) Applicant: **TOLSA S.A.**
**Nunez de Balboa 51**
**E-28001 Madrid(ES)**

(72) Inventor: **Perez Castells, Rafael**
**Maria de Guzman, 49**
**E-28003 Madrid(ES)**
Inventor: **Alvarez Berenguer, Antonio**
**Fermin Caballero, 58**
**E-28034 Madrid(ES)**

(74) Representative: **Ungria Lopez, Javier et al**
**Avda. Ramon y Cajal, 78**
**E-28043 Madrid(ES)**

(54) **Process for manufacture of fibre reinforced concrete articles.**

(57) The present invention refers to the improvements carried out in the processes of manufacture of articles comprising fibre-reinforced concrete, consisting of incorporating sepiolite as rheological load during said manufacturing processes.

EP 0 252 210 A2

## BACKGROUND AND FIELD OF THE INVENTION

The term fibre-reinforced concrete (frc) is a recent one and it is used for describing the products of asbestos--free cements proposed as substitutes of those being manufactured with asbestos (a/c).

There are two main groups of a/c products, the former comprising the level and co-corrugated plates, tiles, low pressure pipes and a wide range of hand or machine-molded products. The latter is that of high pressure pipes, designed to operate at up to 21 atm and used for transporting water at long distances. Due to technical and economical reasons, none of the materials considered as alternative of the asbestos can be used in this case. There are two production methods; the Hatzchek-Mazza system, which ressembles the board and heavy paper manufacturing process and wherein an aqueous suspension of asbestos and cement is initially used, with a rate Water/Solids (A/C) = 2, to be diluted later up to the operating real concentration, which is of a 7-15%. The second method is the Magnani process; in this case, the operating suspension has a concentration of solids of 33 to 50%.

The asbestos have unique properties for the manufacture of these products. The are perfectly compatible with cement in water, yielding homogenous pulps without agglomerates and sheets with the adequate plasticity and wet resistance to be molded. If the fibre length distribution is correctly chosen, a good reinforcement (long fibres) and a good retention of thin cement particles in the filtration (short fibres)- are achieved. The use of amphibole-type asbestos enables to eliminate the problems of filtration and homogeneity which appear sometimes, as this type of asbestos acts as filtration help, dispersing and reinforcing agent.

During last few years there has arisen a need to look for asbestos substitutes, due to environmental considerations, in order to prevent the shortage of this ore or to improve the properties of the a/c products. The biggest disadvantage of the a/c products, in way of sheet, is their low impact resistance and their fragility. Some types of alternative fibres used together with asbestos may help solve this problem, but there are some limitations. The alternatives must be lasting in the cement die and yield the required reinforcing properties, they must not produce any difficulty in the control of the final product density or of the wet product modability, they must be resistant under autoclave conditions in those cases wherein this curing method is used and, above all, they must be cement-compatible and allow thin particle retention. Besides, they must be able to be used without big changes in the current machinery.

The substitution of the resistance properties and processability properties of the asbestos by those of other materials is very difficult and, in fact, impossible with a single product. Thus, the formulation of frc is more complicated than that of a/c products, the substitutive components of the asbestos being able to be classified into:

### 1. Reinforcing fibres:

Natural cellulose fibres or synthetic organic fibres can be used, the most accepted in the bibliography being those of fibred PP, PVA and PAN, and inorganic fibres such as alkali-resistant fibre glass.

### 2. Retention fibres:

Mainly cellulose pulpe, refined at 20-60 Shopper-Riegler decrees, or highly fibred synthetic organic fibres.

### 3. Loads:

3.1. Dispersed colloidal agents.

These products enable to improve the dispersion of the substitutive fibres in the cement dispersion, yielding homogenous dispersions. Besides, they can improve the retention of thin particles and to exercise a control on the filtration speed, with which they enable to obtain a better structure of the sheet. They may be colloidal clays or amorphous silicas.

3.2. Filtration aids:

Mineral fibres such as Wollastonite or MMMF, not-fibred, which due to their structure facilitate the water drainage.

Synthetic reinforcing fibres do not display a good compatibility with cement and require the aid of asbestos, cellulose pulpe or dispersing colloidal agents in order to facilitate the homogeneization thereof.

Besides, these fibres are not capable of retaining thin particles.

Cellulose is lasting, helps in the filtration and improves the impact resistance of the final product, but it has not the reinforcing properties of asbestos, it has mixing difficulties and the apparent density of the final product is reduced. Mineral fibres yield excellent properties concerning filtration and wet resistance, but they do not last, give serious problems of mixture and reduce the resistance and increase the apparent density.

Alkali-resistant fibre glass have a low resistance at a high pH and great application difficulties and, besides, they can not retain thin particles.

As it can be seen in almost all the herein exposed cases, there are problems of homogeneization and compatibility between substitutive fibres and cement, and, in many of them lack of thin particle retention. The lack of homogeneity results in formation of balls and clots in the suspension, which, in the wet sheet, appear as fibre and cement accumulations and give problems in the rotary rolls.

When there are compatibility problems, there is no acceptable joining between fibre and die, thereby resulting in low resistances. The bad retention of thin particles also produces a heterogeneity in the structure of the sheet, which leads to the delamination of plates and, besides, it produces a plasticity reduction.

The retention of thin particles may be improved by flocculants. These products, on the contrary, may reduce the resistance of the final product, as they favour the formation of filtration channels.

Dispersing colloidal agents may improve the retention of thin particles and the homogeneity, and reduce the filtrability, as in the case of the attapulgite (U.S. Pat. 4363666) and of the silicas (EP 0047158 A-1), although in this case the thin-particle retention can be damaged.

## DESCRIPTION OF THE INVENTION

The present invention refers to improvements introduced in the processes of manufacture of articles comprising fibre-reinforced concrete, consisting of incorporating sepiolite as rheological load during said manufacturing processes.

For the development of the present invention, a new colloidal product is used, consisting of sepiolite, which can be used in a/c and frc products in order to improve the homogeneization of fibres and cement in the initial suspension, to improve the retention of thin particles and to control the filtrability of the wet sheet in the process of manufacture of these products.

The sepiolite is a hydrous magnesium silicate of fibrous structure, belonging to the Palygorskite-Sepiolite group. For developing this invention, a rheologically-rated product derived from Sepiolite and manufactured according to EP 85200094-4 or Spanish Patents No. 535,317, 534,891 and 534,838, characterized by having a sepiolite content higher than 50%, a particle size below 25 microns and a viscosity in water with a 6% of solid concentration above 5000 cps (Brookfield, 5 rpm, 25°C) has been used. The specific surface of this product is greater than 120 $m^2/g$, able to reach 340$m^2/g$ ($N_2$BET). Sepiolite fibre size ranges from 0,2 to 2 um long, 100-300 Å large and 50-100 Å thick (Martin Vivaldi and Robertson 1971).

The present invention, such as indicated above, refers to improvements introduced in the processes of manufacture of articles comprising fibre-reinforced concrete, said processes comprising the following steps:

a) Preparation of an aqueous suspension of reinforcing fibres, retention fibres, inorganic binder, inorganic additives for improving the filtration, flocculants or dispersing agents and, in general, any of the additives used in these products;

b) Wet shaping of the articles by previous removal of water;

c) Curing of the shaped articles; said improvements being characterized by comprising the introduction into the initial aqueous suspension rheologically-rated sepiolite in such concentrations that the sepiolite amount in the finished product is from 0,1 to 10%.

The reinforcing fibres used are generally selected among asbestos, cellulose, polyamide, polypropylene, polyester, polyvinyl alcohol, polyacrylonitrile and acrylic fibres. By their side, the retention fibres are selected among asbestos, cellulose pulpe (long or short-fibred, with a Shopper-Riegler refining degree of 20-68°C), cotton or highly--fibred polypropylene fibres.

The concentration of solids in the suspension ranges in general between the 5 and the 50%.

Rheologically rated sepiolite can be added to the initial suspension either as powder or previously dispersed in water in a high shear stirrer and with a solid concentration from the 1 to the 20%. For the preparation of this previous dispersion of the sepiolite, polyphosphate-type dispersers or organic disperses such as cationic, anionic or non-ionic polyacrylamides, in order to favour the dispersion of clay, can be used. Generally, it is preferable to use anionic polyacrylamides at a concentration based on the solids between 0,001 and 0,015%. Besides, with the aim to improve the filtration, inorganic fibres are usually used, such as MMMF or wollastonite, at amounts, based on solids, ranging from 0,2 to 4%.

In the following examples, the invention is illustrated more specifically. Nevertheless, said examples must not be considered as limitative of the scope of the invention, which is only determined by the attached set of claims. In the present specification, the percentages are expressed in weight.

EXAMPLES

The methodology used for examples 1 to 4 is as follows:

-Process for mixing the components:

The reinforcing fibres and the retention fibres are dispersed in water, together with $Al_2(SO_4)_3$ in those cases wherein it is used at 2700 rpm for 1 min. in a stirrer of the COWLES type, decreasing the speed afterwards to 700 rpm and stirring for 4 min. The colloidal loads are immediately added, stirring for 1 min. at 2700 rpm, followed by the flocculant, which is previously solved into water, and, finally, the cement is added, stirring at 700 rpm until homogeneity is reached. The solid concentration of the pulp is always of the 15% by weight.

The water used is saturated in calcium sulfate of hydroxide.

The aluminium sulfate and the flocculant are previously solved into water at 30 g/l and 1.2 g/l, respectively. The colloidal loads are added in powder, with the exception of the rheologically-rated sepiolite, which is added as aqueous suspension with a 6% of solid concentration.

-Assay processes:

The sedimentation volume (S), filtration rate (V) and thin particle lost (P) and homogeneity of the reinforced concrete suspensions are determined. (S) gives a numerical idea of the homogeneity of the sheet structure and of the fibre dispersibility, whilst the determination of the homogeneity gives a subjective idea thereof.

Filtration rate: 500 cm³ of pulp are put in a BUCHNER funner of 9 cm of diameter, wherein a screen of 80 ASTM mesh has been put. Vacuum is made at about 450 mm Hg and the time it takes to filter the liquid is measured.

Retention of thin particles: The filtrate of the above assay is filtered through an ALBET 238 paper and dried at 110°C for 2 hours, calculating the percentage of thin particles retained on the basis of the concentration of solids of the initial pulp.

Sedimentation: The pulp to be measured is put in a 250 cm³ test tube and the volume poured in 5 minutes is measured. It is expressed as percentage.

## EXAMPLE 1

Comparation between rheologically-rated sepiolite and other colloidal loads

Table 1 shows the 1-7 formulations, wherein comparison is made with respect to the effects of rheological sepiolite (Pangel HV), silica from ferrosilicon ovens (SFH) and mixtures of natural silicas and kaolin (Sillitin N85 WE) on the properties of the reinforced concrete pulp. All the loads improve the pulp sedimentation volume, which indicates that there is a greater homogeneity in the structure of the sheet formed, but the Pangel HV has a more pronounced effect in much smaller concentrations than those of the other loads. The filtration rate slightly decreases with Sillitin W85 EW $\beta$ and with SHF, with Pangel HV it undergoes an important decrease, above all over two dosing parts. The silicas being used have no effect, or have a negative effect upon thin particle retention, meanwhile Pangel HV drastically controls this parameter. Clot formation can only be avoided with Pangel HV in dosings of about 2-3 parts. The numeration used results in:

1) Homogeneous, without clots.
2) Some clots.
3) Heterogeneous, a great number of clots.

This factor indicates that the Pangel HV helps in making compatible the reinforcing fibres and the retaining ones with the cement, for which the obtained frc must be homogeneous and therefore in-machine problems and problems of resistance of the finished product are avoided.

## EXAMPLE 2

Effect of the fibre length and refining degree of the cellulose pulp

Table 2 shows the 8-13 formulations, wherein comparison is made concerning the effect of the fibre length and the fifining degree of the cellulose pulp, used as retaining fibre, in frc formulations with Pangel HV as colloidal load.

The highest refining degrees (50°SR and 68°SR) enable to diminish the filtration time, without affecting neither the retention of thin particles, nor the sedimentation volume. The longest fibres do not reduce the filtration time.

## EXAMPLE 3

Effect of the reinforcing fibres

Table 3 shows the 14 and 15 formulations, wherein it can be seen that the increase in the dosing of reinforcing fibres increases the filtration rate, though it increases the losses of thin particles. Likewise, it can be seen that cotton has less capability of retaining thin particles than cellulose pulp in previous formulations.

## EXAMPLE 4

Effect of the flocculants.

In formulations 16-24 it can be seen that the Pangel HV also has a positive effect on the sedimentation volume and loss of thin particles and a/c products homogeneity, but it highly increase the filtration time. In order to diminish the filtration tiem, polyphosphates of better anionic polyacrylamides of high molecular weight can be used.

If the amount of flocculant is adequately chosen, there is no reason for the loss of thin particles to increase.

## TABLE 1

Comparison of the effect of different colloidal loads on the frc pulp properties.

|  | 1 | 2 | 3 | 4 | 5 | 6 | 7 |
|---|---|---|---|---|---|---|---|
| P.450 Cement | 100 | 100 | 100 | 100 | 100 | 100 | 100 |
| PAN-fibre | 1,5 | 1,5 | 1,5 | 1,5 | 1,5 | 1,5 | 1,5 |
| $Al_2(SO_4)_3$ | 1,8 | 1,8 | 1,8 | 1,8 | 1,8 | 1,8 | 1,8 |
| Anionic polyacrylamide[1] | 0,008 | 0,008 | 0,008 | 0,008 | 0,008 | 0,008 | 0,008 |
| Short-fibre 50°SR cellulose pulp | 3,0 | 3,0 | 3,0 | 3,0 | 3,0 | 3,0 | 3,0 |
| Pangel HV Silica from ferrosilicon | – | 1 | 3 | – | – | – | – |
| ovens | – | – | – | 3 | 6 | – | – |
| Silica/Kaolin[3] | – | – | – | – | – | 3 | 6 |
| Thin-particle loss (%) | 5,2 | 4,3 | 1,9 | 6,7 | 6,9 | 5,5 | 5,2 |
| Sediment Volume (%) | 55 | 80 | 94 | 78 | 76 | 63 | 73 |
| Filtration rate (seg) | 37 | 39 | 113 | 46 | 79 | 34 | 43 |
| Homogeneity | 3 | 2 | 1 | 2 | 2 | 3 | 3 |

## TABLE 2

Effect of the fibre length and refining degree of the cellulose pulp on the frc pulp properties.

|  | 8 | 9 | 10 | 11 | 12 | 13 |
|---|---|---|---|---|---|---|
| P450 Cement | 91,90 | 91,90 | 93,18 | 91,48 | 91.90 | 91,90 |
| Anionic polyacryl mide[1] | 0,007 | 0,007 | 0,007 | 0,007 | 0,007 | 0,007 |
| $Al_2(SO_4)_3$ | 1,65 | 1,65 | 1,65 | 1,65 | 1,65 | 1,65 |
| PAN-fibre | 1,38 | 1,38 | 1,40 | 1,37 | 1,38 | 1,38 |
| Pangel HV[3] | 3,22 | 3,22 | 2,79 | 2,74 | 3,22 | 3,22 |
| Short-fibred 20°SR cellulose | 1,84 | – | – | – | – | – |
| Short-fibred 50°SR cellulose | – | 1,84 | 0,93 | 2,74 | – | – |
| Short-fibred 68°SR cellulose | – | – | – | – | 1,84 | – |
| Long-fibred 50°SR cellulose | – | – | – | – | – | 1,84 |
| Sediment volume (%) | 97,3 | 97,8 | 98,6 | 98,0 | 96,3 | 97,3 |
| Filtration rate (seg) | 222 | 199 | 246 | 160 | 170 | 222 |
| Thin-particle loss (%) | 4,44 | 2,59 | 3,22 | 2,72 | 2,68 | 3,39 |

TABLE 3

Effect of the reinforcing fibres on the frc pulp properties.

P

| | | 14 | 15 |
|---|---|---|---|
| | P450 cement | 93.5 | 91.71 |
| | Pangel HV | 2.40 | 2.35 |
| | $Al_2(SO_4)_3$ | 1.70 | 1.69 |
| | Anionic polyacryl-amide | 0.008 | 0.007 |
| | PAN-fibre | 0.50 | 2.36 |
| | Cotton | 1.90 | 1.88 |

| | 14 | 15 |
|---|---|---|
| Sedimentation volume (%) | 84 | 100 |
| Filtration rate (seg.) | 89 | 65 |
| Thin particle loss (%) | 12.4 | 17.8 |

## TABLE 4

**Effects of the flocculants on the properties of the frc pulp obtained with Pangel HV.**

| | 16 | 17 | 18 | 19 | 20 | 21 | 22 | 23 | 24 |
|---|---|---|---|---|---|---|---|---|---|
| P450 Cement | | | | | | | | | |
| Asbestos | 87,0 | 82,6 | 82,6 | 82,6 | 82,6 | 82,6 | 82,6 | 82,6 | 82,6 |
| Pangel HV[2] | 13,0 | 12,3 | 12,3 | 12,3 | 12,3 | 12,3 | 12,3 | 12,3 | 12,3 |
| TSPP | - | 5,1 | 5,1 | 5,1 | 5,1 | 5,1 | 5,1 | 5,1 | 5,1 |
| Anionic polyacryl[4] amide of high mol. weight | - | - | 0,0024 | 0,0240 | - | - | - | - | - |
| Anionic polyacryl[5] amide of low mol. weight | - | - | - | 0,0048 | - | - | - | - | - |
| | - | - | - | - | 0,0024 | 0,0048 | - | - | - |
| Anionic polyacryl[6] amide of mid mol. weight. | - | - | - | - | - | - | - | 0,0024 | 0,0048 |
| Sedimentation volume (%) | 82,4 | 100 | 98,4 | 98,4 | 94 | 97,6 | 96,0 | 95,2 | 93,6 |
| Filtration rate (seg) | 31 | 231 | 100 | 160 | 45 | 142 | 115 | 126 | 103 |
| Thin particle loss (%) | 3,68 | 1,03 | 1,02 | 1,60 | 1,70 | 2,02 | 1,70 | 2,02 | 2,08 |
| Homogeneity | 2 | 1 | 1 | 1 | 1 | 1 | 1 | 1 | 1 |

EXAMPLE 5

Synthetic Fibre Dispersion into Colloidal Load Suspensions.

The dispersion of PVA, PAN or acrylic fibres into colloidal load suspensions is studied, using the following formulations:

| | 1 | 2 | 3 | 4 |
|---|---|---|---|---|
| Colloidal load | - | 0.5 | 1 | 2 |
| Reinforcing fibre | 0.1 | 0.1 | 0.1 | 0.1 |
| Water | 99.9 | 99.4 | 98.9 | 97.9 |

The fibre is dispersed in a COWLES-type stirrer at 2700 rpm for 2 min. Pangel HV was added, having been previously dispersed into water to a 6% at 2700 rpm for 10 min. The suspensions are filtered under vacuum and dried at 100°C for 2 hours. In the case of Pangel HV the fibres are disclosed by heating at 200°C for 15 min, because both products have similar colours and can not be differentiated in-between.

In all the cases having been studied, it can be seen that there is a segregation between fibres and amorphous silicas, whilst Pangel HV forms a homogeneous sheet with fibres.

REMARK:

1) Separan NP-10 - Dow Chemical.
2) Montefibre 6 - Montedison.
3) Pangel HV is the commercial name of the rheologically-rated sepiolite used in these assays.
4) Magnafloc 611 - Allied Colloids Ltd.
5) Magnafloc 155 - Allied Colloids Ltd.
6) Magnafloc 20/25 - Allied Colloids Ltd.

**Claims**

1. IMPROVEMENTS INTRODUCED IN THE PROCESSES OF MANUFACTURE OF ARTICLES CONSISTING OF FIBRE-REINFORCED CONCRETE, said processes comprising the following steps:

a) Preparation of an aqueous suspension of reinforcing fibres, retaining fibres, inorganic binder, inorganic additives for improving the filtration, flocculants or dispersers and optionally other conventional additives;

b) wet-shaping of the articles by previous removal of water;

c) curing of the shaped articles,

said improvements being characterized by comprising the introduction into the initial aqueous suspension of rheologically rated sepiolite in such concentrations that the amount of sepiolite in the finished produced is 0.1 to 10%.

2. IMPROVEMENTS INTRODUCED IN THE PROCESSES OF MANUFACTURE OF ARTICLES CONSISTING OF FIBRE-REINFORCED CONCRETE, according to claim 1, wherein the solid concentration of the suspension ranges between 5 and 20%.

3. IMPROVEMENTS INTRODUCED IN THE PROCESSES OF MANUFACTURE OF ARTICLES CONSISTING OF FIBRE-REINFORCED CONCRETE, according to claim 1, wherein the solid concentration of the suspension ranges between 20 and 50%.

4. IMPROVEMENTS INTRODUCED IN THE PROCESSES OF MANUFACTURE OF ARTICLES CONSISTING OF FIBRE-REINFORCED CONCRETE, according to claim 1, wherein the reinforcing and retaining fibres are asbestos.

5. IMPROVEMENTS INTRODUCED IN THE PROCESSES OF MANUFACTURE OF ARTICLES CONSISTING OF FIBRE-REINFORCED CONCRETE, according to claim 1, wherein the reinforcing fibres are cellulose, polyamide, polypropylene, polyester, polyvinyl alcohol, polyacrylonitrile or acrylic fibres.

6. IMPROVEMENTS INTRODUCED IN THE PROCESSES OF MANUFACTURE OF ARTICLES CONSISTING OF FIBRE-REINFORCED CONCRETE, according to claim 1, wherein the reinforcing fibres consist of polypropylene mesh.

7. IMPROVEMENTS INTRODUCED IN THE PROCESSES OF MANUFACTURE OF ARTICLES CONSISTING OF FIBRE-REINFORCED CONCRETE, according to claim 1, wherein the retaining fibres are long or short fibred cellulose pulp with a refining Shopper-Riegler degree of 20-68°, cotton or highly fibred polypropylene fibres.

8. IMPROVEMENTS INTRODUCED IN THE PROCESS OF MANUFACTURE OF ARTICLES CONSISTING OF FIBRE-REINFORCED CONCRETE, according to claims 1, 2, 3, 4, 5, 6 and 7, wherein the rheologically rated sepiolite is added to the initial suspension as powder.

9. IMPROVEMENTS INTRODUCED IN THE PROCESSES OF MANUFACTURE OF ARTICLES CONSISTING OF FIBRE-REINFORCED CONCRETE, according to claims 1, 2, 3, 4, 5, 6 and 7, wherein the rheologically rated sepiolite is added to the initial suspension previously dispersed into water in a high-shear stirrer and with a solid concentration ranging from 1 to 20%.

10. IMPROVEMENTS INTRODUCED IN THE PROCESSES OF MANUFACTURE OF ARTICLES CONSISTING OF FIBRE-REINFORCED CONCRETE, according to claims 1, 2, 3, 4, 5, 6, 7 and 9, wherein in the previous rheologically rated sepiolite dispersion dispersers of the polyphosphate type, or organic dispersers such as cationic,anionic or non-ionic polyacrylamides are used in order to favour the dispersion of the clay.

11. IMPROVEMENTS INTRODUCED IN THE PROCESSES OF MANUFACTURE OF ARTICLES CONSISTING OF FIBRE-REINFORCED CONCRETE, according to claims 1, 2, 3, 4, 5, 6, 7, 8, 9 and 10, wherein to the initial suspension anionic polyacrylamides are added at a concentration related to solids ranging from 0.001 and 0.015%.

12. IMPROVEMENTS INTRODUCED IN THE PROCESSES OF MANUFACTURE OF ARTICLES CONSISTING OF FIBRE-REINFORCED CONCRETE, according to claims 1 to 11, wherein MMMF inorganic fibres or Wollastonite are used in order to improve the filtration and in amounts referred to solids ranging from 0.2 to 4%.